# EUROPEAN PATENT SPECIFICATION

(11) **EP 0 988 789 B1**
(45) Date of publication and mention of the grant of the patent: **27.08.2003**
(21) Application number: 99307137.2
(22) Date of filing: 09.09.1999
(51) Int. Cl.: A01N 43/80, A01N 25/32

(54) **Reduced pitting microbicide formulation**
Mikrobizide Formulierung mit verringerter Rostfrasskorrosion
Formulation microbicide avec une formation reduite des piqûres

(30) Priority: 24.09.1998 US 101596 P
(43) Date of publication of application: 29.03.2000
(73) Proprietor: ROHM AND HAAS COMPANY, Philadelphia, Pennsylvania 19106-2399 (US)
(72) Inventor: Nelson, John Gilbert, Lafayette Hill, Pennsylvania 19444 (US); Simon, Ethan Scott, Abington, Pennsylvania 19001 (US); Mattox, John Robert, Perkasie, Pennsylvania 18944 (US); Frechem, Bart Shannon, Hatfield, Pennsylvania 19440 (US)
(74) Representative: Davis, Carole Amanda

(56) References cited:
- EP-A- 0 166 611
- EP-A- 0 342 852
- EP-A- 0 425 143
- EP-A- 0 754 407
- D. F. HEENAN ET AL.: "Isothiazolone microbiocide-mediated steel corrosion and its control in Aluminum hot rolling emulsions." LUBR. ENGIN., vol. 47, no. 7, July 1991 (1991-07), pages 545-548, XP000940451

## Description

### Background of the Invention

This invention relates to the prevention of corrosion of steel in contact with microbicide formulations. In particular, this invention relates to the reduction of pitting of stainless steel in contact with microbicide formulations.

Microbicides are used commercially to prevent the growth of microbes in a variety of loci, such as cooling towers, metal working fluid systems, paint and cosmetics. One of the more important classes of microbicides is 3-isothiazolones. Many 3-isothiazolones have achieved commercial success because they are very effective in preventing microbial growth under a wide variety of conditions and in a variety of loci. 3-Isothiazolone microbicides are formulated in a variety of ways, such as solutions in water, solutions in organic solvents, emulsions and microemulsions. The stabilization of solutions containing 3-isothiazolone microbicides has been a major issue addressed by the prior art. For example, EP 0166 611 discloses the stabilization of aqueous solutions containing 5-chloro-3-isothiazolone by the addition of certain alcohol group containing compounds. EP 0342 852 teaches that various epoxides may be used to stabilize isothiazolone or isothiazolone compositions which are either neat or in solution; however, none of the epoxides disclosed are epoxidized derivatives of unsaturated vegetable oils of the type used in the compositions of the present invention. Finally, EP 0754 407 teaches that liquid compositions containing 1,2-benzisothiazolin-3-one can be made stable by the addition of one or more polyglycol triols.

3-Isothiazolone microbicides formulated in organic solvents are generally transported or stored as concentrated forms in stainless steel containers. Such formulations are often corrosive, resulting in severe pitting of the stainless steel containers. Such pitting reduces the integrity of the containers, thereby increasing the chances of a leak of the microbicide formulation. Such leaks may pose a safety or handling risk to workers. The pitting of the stainless steel containers also shortens their useful lifetime, which increases the transportation and storage costs of 3-isothiazolone microbicide formulations.

Various methods of preventing corrosion and pitting have been tried. These include the use of more resistant stainless steel alloys, changes in the microbicide formulations and shorter residence times of the formulations in the containers. None of these methods adequately reduce the corrosion and/or pitting of the stainless steel containers due to contact with the 3-isothiazolone formulations.

It is known that the addition of small amounts of water to organic solutions results in the passivation of metals, see for example, Kelley et al., Corrosion Science, Vol. 30, No. 4/5, pp 495-509 (1990). A metal is passivated when a thin surface layer forms on the metal that prevents direct contact with a solution. Such passivated metal resists general corrosion, but not pitting. In contrast, pitting occurs in surfaces that are already passivated. Pitting in passivated surfaces occurs through the formation of small defects in the passive layer that continue to grow, even in the presence of passivating agents. Pitting is one of the most destructive forms of corrosion because it causes containers to fail due to perforation of the container.

Thus, there is a continuing need for a method of preventing corrosion and/or pitting of stainless steel containers in contact with 3-isothiazolone microbicide formulations.

### Summary of the Invention

It has now surprisingly been found that the addition of relatively small amounts of water, (C₂-C₆)alcohols, zinc acetate, epoxides, or mixtures thereof to a 3-isothiazolone microbicide in an organic solvent greatly reduces the pitting of stainless steel containers.

The present invention is directed to 3-isothiazolone compositions having reduced pitting toward stainless steel comprising 0.5 to 75 %wt 3-isothiazolone compound: organic solvent; and 0.1 to 10 %wt of an anti-pitting agent selected from the group consisting of (C₂-C₆)alcohols, zinc acetate, epoxidized derivatives of unsaturated vegetable oil, and mixtures thereof, wherein said composition is substantially free of chloride ion.

The present invention is also directed to a method of reducing the pitting of stainless steel carriers containing a non-aqueous microbicide formulation of a 3-isothiazolone compound in an organic solvent comprising combining with said formulation 0.1 to 10 %wt of an anti-pitting agent selected from the group consisting of water, (C₂-C₆)alcohols, zinc acetate, epoxides and mixtures thereof, wherein said formulation is substantially free of chloride ion.

### Detailed Description of the Invention

As used throughout the specification, the following terms shall have the following meanings, unless the context clearly indicates otherwise.

The term "microbicide" refers to a compound capable of inhibiting the growth of or controlling the growth of microorganisms at a locus. The term "microorganism" includes, but is not limited to, fungi, bacteria, and algae. "Containers" refer to tanks, vats, vessels, totes, bins, drums, pipes, and the like used to transport or store microbicide formulations. "Stainless steel" refers to an alloy of steel with chromium that resists rusting and ordinary corrosion and includes all types and grades of stainless steel including super stainless steels. "Super stainless steels" refer to higher alloyed stainless steels. "Propanol" refers to both n-propanol and isopropanol.

As used in this specification, the following abbreviations are applied: C = centigrade; ppm = parts per million; g = gram; and %wt = percent by weight.

All amounts are percent by weight and all ratios are by weight, unless otherwise noted. All ranges are inclusive.

The 3-isothiazolone microbicide formulations useful in the compositions and the method of the present invention are non-aqueous and comprise 3-isothiazolone microbicide, one or more organic solvents, and are substantially free of chloride ion. Substantially free of chloride ion means that the 3-isothiazolone formulations contain less than 0.1 %wt of chloride ion, preferably less than 0.05 %wt, and more preferably less than 0.01 %wt, based on the total weight of the formulation. In general, these non-aqueous 3-isothiazolone formulations contain less than 1000 ppm of water, preferably less than 500 ppm, and more preferably less than 200 ppm, based on the total weight of the formulation. It is especially preferred that the 3-isothiazolone microbicide formulations useful in the present invention are free of water.

The 3-isothiazolone formulations may optionally contain surfactants. The surfactants useful in the compositions and method of the present invention may be anionic, non-ionic, cationic, or mixtures thereof. Preferred surfactants are anionic, non-ionic, or mixtures thereof. When the 3-isothiazolone formulations contain surfactants, the formulations are generally in the form of emulsive concentrates or microemulsive concentrates. Emulsive concentrates form emulsions upon the addition of a sufficient amount of water. Microemulsive concentrates form microemulsions upon the addition of a sufficient amount of water. Such 3-isothiazolone emulsive and microemulsive concentrates are well known in the art. For example, US 5,444,078 (Yu) discloses the preparation of microemulsive concentrates of 3-isothiazolones and is incorporated by reference to the extent it teaches the preparation of these microemulsive concentrates. It is preferred that the 3-isothiazolone formulations are free of surfactants.

The 3-isothiazolone formulations may optionally contain stabilizers for the 3-isothiazolone compounds. These stabilizers are well-known in the art. Suitable stabilizers include, but are not limited to: metal nitrate salts, cupric ion, iodic acid, iodic acid salts, periodic acid, periodic acid salts, trialkyl orthoformates, and mixtures thereof. It is well-known in the art that the amount of stabilizer necessary depends upon the concentration of the 3-isothiazolone. Typically, the amount of stabilizer suitable for 3-isothiazolones in organic solvents is in the range of 0.1 to 35 %wt, preferably 0.5 to 25 %wt, and more preferably 1 to 15 %wt, based on the total weight of the 3-isothiazolone compound and the organic solvent.

The 3-isothiazolone compounds useful in the compositions and method of the present invention include, but are not limited to: 2-methyl-3-isothiazolone; 5-chloro-2-methyl-3-isothiazolone; 2-methyl-3-isothiazolone; 5-chloro-2-ethyl-3-isothiazolone; 2-n-octyl-3-isothiazolone; 4,5-dichloro-2-n-octyl-3-isothiazolone; 1,2-benzisothiazolone; 4,5-trimethylene-2-methyl-3-isothiazolone; and mixtures thereof. It is preferred that the 3-isothiazolones are 2-methyl-3-isothiazolone; 5-chloro-2-methyl-3-isothiazolone; 2-n-octyl-3-isothiazolone; 4,5-dichloro-2-n-octyl-3-isothiazolone; and mixtures thereof, and more preferably 2-methyl-3-isothiazolone; 5-chloro-2-methyl-3-isothiazolone; 2-n-octyl-3-isothiazolone; and mixtures thereof.

The 3-isothiazolones may be combined with any organic solvent that does not react with or otherwise degrade the 3-isothiazolone, such as glycols, glycol ethers, aromatic hydrocarbons, phenoxyalkanols, ketones, and mixtures thereof. Glycols and glycol ethers are preferred organic solvents. Suitable organic solvents include, but are not limited to: ethylene glycol, diethylene glycol, polyethylene glycol, propylene glycol, dipropylene glycol, polypropylene glycol, xylene, toluene, monochlorobenzene, phenoxyethanol, phenoxypropanol, benzyl alcohol, methyl ethyl ketone, acetone, methyl iso-butyl ketone, and mixtures thereof. It is preferred that the organic solvent is ethylene glycol, diethylene glycol, polyethylene glycol, propylene glycol, dipropylene glycol, polypropylene glycol, phenoxyethanol, phenoxypropanol, or mixtures thereof. When polyethylene glycol is used as the solvent, any molecular weight of polyethylene glycol that provides suitable viscosity in the intended use is suitable. It is preferred that the molecular weight of polyethylene glycol is from 200 to 10,000, and more preferably from 600 to 4,600.

In general, the amount of 3-isothiazolone microbicide useful in the compositions and method of the present invention is from 0.5 to 75 %wt, based on the total weight of the 3-isothiazolone and the organic solvent. It is preferred that the amount of the 3-isothiazolone is from 5 to 60 %wt, and more preferably from 15 to 55 %wt, based on the total weight of the 3-isothiazolone and the organic solvent.

The anti-pitting agents useful in the method of the present invention are those selected from the group consisting of water, (C₂-C₆)alcohols, zinc acetate, epoxides, and mixtures thereof. It is preferred that the anti-pitting agent is water, zinc acetate, epoxides, or mixtures thereof. The epoxides useful as anti-pitting agents in the method of the present invention are any that 1) do not react with the 3-isothiazolone compounds by reducing their biological effectiveness and 2) are miscible with the organic solvent used. Suitable epoxides include, but are not limited to: butyl glycidyl ether; propyl glycidyl ether; phenyl glycidyl ether; methylphenyl glycidyl ether; tert-butylphenyl glycidyl ether; methoxyphenyl glycidyl ether; 1,2-cyclohexene oxide; beta-pinene oxide; benzyl 3,4-epoxybutyl ether; butyl glycidyl thioether; ethylene glycol bis(glycidyl ether); propylene glycol bis(glycidyl ether); tri(glycidyl ether); glycerol di(glycidyl ether); diglycerol poly(glycidyl ether); trimethylolpropane tri(glycidyl ether); sorbitol poly(glycidyl ether); glycerin glycidyl ether; epoxidized derivatives of unsaturated vegetable oils; and mixtures thereof. Suitable epoxidized derivatives of unsaturated vegetable oils include, but are not limited to: epoxidized soy bean oil, epoxidized grape seed oil, epoxidized cotton seed oil, epoxidized peanut oil, epoxidized safflower oil, epoxidized corn oil, epoxidized olive oil, and mixtures thereof. Preferred epoxides are epoxidized derivatives of unsaturated vegetable oils.

The anti-pitting agents useful in the compositions of the present invention are those selected from the group consisting of (C₂-C₆) alcohols, zinc acetate, epoxidized derivatives of unsaturated vegetable oils, or mixtures thereof. The epoxidized derivatives of unsaturated vegetable oils useful in the composition of the present invention are any that: 1) do not react with the 3-isothiazolone compounds by reducing their biological effectiveness and 2) are miscible with the organic solvent used. Suitable epoxidized derivatives of unsaturated vegetable oils include but are not limited to: epoxidixed soy bean oil, epoxidized grape seed oil, epoxidized cotton seed oil, epoxidized peanut oil, epoxidized safflower oil, epoxidized corn oil, epoxidized olive oil, and mixtures thereof.

When zinc acetate is used as an anti-pitting agent in the method of the present invention, it is preferred that a small amount of water be used in combination with the zinc acetate. This small amount of water may be added to the formulation separately from the zinc acetate or may be combined with the zinc acetate prior to addition to the composition. In the alternative, in either the method of the composition of the present invention the zinc acetate may be added to the composition in the form of a hydrate. A typical hydrate of zinc acetate has 2.5 moles of water per mole of zinc acetate.

When the anti-pitting agent is a (C₂-C₆)alcohol, it is preferred that the alcohol is ethanol, propanol, or a mixture thereof.

When water is used as the anti-pitting agent in the method of the present invention, any type of water is suitable, such as tap water, deionized water or distilled water. It is preferred that the water have a low chloride ion content, and preferably a low total ion content. Typically, water having a low chloride content is water having less than 0.1 %wt chloride ion. When the anti-pitting agent is (C₂-C₆)alcohols, zinc acetate or epoxide, any good commercial grade is suitable. The anti-pitting agents useful in the present invention are generally commercially available, such as from Aldrich Chemical Company (Milwaukee, Wisconsin), and may be used without further purification.

The amount of anti-pitting agent useful in the method and composition of the present invention is typically from 0.1 to 10 %wt, based on the total weight of the composition. It is preferred that the amount of the anti-pitting agent is 0.2 to 5 %wt, and more preferably from 0.5 to 3 %wt, based on the total weight of the composition. When zinc acetate is used alone as the anti-pitting agent, it is preferred that the amount of zinc acetate is from 0.1 to 0.5 %wt. When a combination of zinc acetate and water is used as the anti-pitting agent, the amount of zinc acetate is typically in the range of 0.1 to 0.5 %wt and the amount of water is typically in the range of 0.1 to 3 %wt. When epoxides are used as the anti-pitting agent, it is preferred that the amount of the epoxide is from 0.2 to 5 %wt, based on the total weight of the composition.

The anti-pitting agents, 3-isothiazolone microbicide, and organic solvent may be combined in any order. It is preferred that the anti-pitting agent is added to a combination of the 3-isothiazolone microbicide and an organic solvent.

The compositions of the present invention show reduced pitting toward all types and grades of stainless steels, such as austenitic, ferritic, martensitic, duplex, and precipitation hardening. Duplex stainless steels are mixtures of austenitic and ferritic steels. The compositions of the present invention are particularly useful in reducing the pitting of austenitic and duplex stainless steels, which are the steels commonly used in the manufacture of containers for the transport or storage of chemicals. The compositions of the present invention are particularly useful in reducing the pitting of 200, 300, 900, 2200 and 2500 series stainless steels, as designated by the American Iron and Steel Institute ("ANSI"). The compositions of the present invention are especially useful in reducing the pitting of 304, 304L, 316, 316L, 321, 347, 2205, and 2507 stainless steels, as designated by ANSI. These ANSI series designations indicate the amount of the major components of the particular steels. For example, series 300 and 900 stainless steels generally have iron, nickel, chromium, and molybdenum as major components, while the series 200 steels generally have iron, manganese, chromium and molybdenum as major components. ANSI series 2200 and 2500 are duplex stainless steels.

The anti-pitting agents of the present invention may be used to reduce the pitting of stainless steel containers in contact with any biologically active compound in an organic solvent. Suitable biologically active compounds include, but are not limited to: agricultural fungicides, herbicides, insecticides, termiticides, miticides, and microbicides.

The following examples are presented to illustrate further various aspects of the present invention, but are not intended to limit the scope of the invention in any aspect. The stainless steel coupons, available from Metal Samples (Munford, AL), used in the following examples were 5 cm x 1.9 cm x 0.16 cm (2" x ¾" x 1/16") with a finish of 120 grit. Where noted, the coupons tested had a 0.95 cm (3/8") hole in the center and contained a polytetrafluoroethylene ("PTFE") crevice washer. The crevice washers were used to simulate crevices in equipment or containers. Before use, each coupon was cleaned with a non-chloride cleanser, scrubbed, rinsed with water, and then rinsed with acetone. The following 3-isothiazolone formulations were used in the following examples:

### 3-Isothiazolone Formulations

- A =: 50 %wt of 2-methyl-3-isothiazolone in propylene glycol
- B =: 45 %wt of 2-n-octyl-3-isothiazolone in propylene glycol
- C =: 15 %wt of a 3:1 mixture of 5-chloro-2-methyl-3-isothizolone and 2-methyl-3-isothiazolone in dipropylene glycol with 6 %wt triethyl orthoformate as stabilizer for the 3-isothiazolones.

### Examples 1-12

To each of several empty glass jars were added an appropriate amount of a 3-isothiazolone microbicide formulation and water as the anti-pitting agent. The jars were capped and the samples shaken to dissolve the anti-pitting agent. A coupon (either 304L or 316L stainless steel) was then added to each jar with PTFE tape looped through the hole in the coupon and tied at the top. The height of the coupon was adjusted such that 75% of the coupon was immersed in the test fluid and the PTFE tape secured to the outside of the jar. The jar was then capped and placed in an oven at 40° C. The jars were stored for 30, 60 or 90 days before being evaluated.

At the end of each test, the coupons were removed from the jar, washed with soap and water, rinsed with acetone and dried. The coupons were examined at 45X under a light microscope for the presence of pitting corrosion. The extent of pitting corrosion was rated according to the following scale:
0 = no observable corrosion
1 = pit initiation
2 = very slight pitting
3 = pitting
4 = large pits

A rating of 0-2 after 90 days of testing is considered passing.

**Table 1**

| **Example #** | **3-Isothiazolone Formulation** | **Water (%wt)** | **Coupon** | **Rating** | **Days** |
|---|---|---|---|---|---|
| control | A | 0 | 316L | 3 | 30 |
| control | A | 0 | 304L | 4 | 90 |
| 1 | A | 0.2 | 316L | 2 | 60 |
| 2 | A | 0.5 | 316L | 2 | 60 |
| 3 | A | 1 | 316L | 0 | 60 |
| 4 | A | 2 | 316L | 0 | 60 |
| 5 | A | 2 | 316L | 0 | 30 |
| 6 | A | 2 | 304L | 1 | 90 |
| 7 | A | 5 | 316L | 0 | 60 |
| 8 | B | 2 | 304L | 2 | 90 |
| 9 | B | 5 | 316L | 1 | 90 |
| 10 | B | 10 | 316L | 1 | 90 |
| 11 | A | 10 | 316L | 2 | 60 |
| 12 | A | 10 | 316L | 1 | 90 |
| Comparative 1 | A | 50 | 316L | 2 | 60 |
| Comparative 2 | A | 50 | 316L | 4 | 90 |
| Comparative 3 | A | 100 | 316L | 3 | 60 |
| Comparative 4 | A | 100 | 316L | 3 | 90 |

As can be seen from the above data, the addition of 0.2 to 10 %wt of water to a formulation of a 3-isothiazolone microbicide in an organic solvent greatly reduces the pitting of stainless steel in contact with the 3-isothiazolone composition.

### Examples 13-23

The procedure of Example 1 was repeated, except that anhydrous zinc acetate, hydrated zinc acetate or a combination of zinc acetate and water was used as the anti-pitting agent. Unless otherwise noted, all samples were stored at 40° C for 90 days before being evaluated.

**Table 2**

| **Example #** | **3-Isothiazolone Formulation** | **Zinc Acetate (ppm)** | **Water (%wt)** | **Coupon** | **Rating** |
|---|---|---|---|---|---|
| control* | A | none | none | 316L | 3 |
| control | A | none | none | 304L | 3 |
| 13 | A | Anhydrous (1000) | 0 | 304L | 3 |
| 14 | A | Anhydrous (1000) | 2 | 304L | 0 |
| 15 | A | Anhydrous (1000) | 0 | 316L | 2 |
| 16 | A | Anhydrous (1000) | 2 | 316L | 0 |
| 17 | A | Anhydrous (5000) | 0 | 316L | 0 |
| 18 | A | Hydrate (1000) | 0 | 316L | 0 |
| 19 | A | Hydrate (1000) | 2 | 316L | 0 |
| 20 | B | Anhydrous (1000) | 0 | 304L | 2 |
| 21 | B | Anhydrous (1000) | 2 | 304L | 1 |
| 22 | B | Anhydrous (1000) | 0 | 316L | 0 |
| 23 | B | Anhydrous (1000) | 2 | 316L | 0 |
| Comparative 5 | A | Anhydrous (50) | 0 | 316L | 3 |
| Comparative 6 | A | Anhydrous (100) | 0 | 316L | 3 |
| Comparative 7 | A | Anhydrous (500) | 0 | 316L | 3 |

| | | | | | |
|---|---|---|---|---|---|
| * Stored for 30 days at 40 °C. | | | | | |

These data clearly show that zinc acetate when used alone or in combination with water is effective in reducing the pitting of stainless steel containers in contact with 3-isothiazolone microbicide formulations.

### Examples 24-27

The procedure of Example 1 was repeated, except that various alcohols were used as the anti-pitting agents. All the alcohols were used at a level of 2 %wt, based on the total weight of the composition.

**Table 3**

| **Example #** | **3-Isothiazolone Formulation** | **Anti-pitting Agent** | **Coupon** | **Rating** | **Days** |
|---|---|---|---|---|---|
| control | A | none | 316L | 3 | 90 |
| control | A | none | 304L | 3 | 90 |
| 24 | A | ethanol | 316L | 1 | 90 |
| 25 | A | ethanol | 304L | 3 | 90 |
| 26 | A | isopropanol | 316L | 0 | 90 |
| 27 | A | isopropanol | 304L | 3 | 90 |
| Comparative 8 | A | methanol | 316L | 3 | 90 |
| Comparative 9 | A | methanol | 304L | 3 | 90 |

The above data clearly show that ethanol and propanol are effective as anti-pitting agents in the present invention.

### Example 28

The procedure of Example 1 was repeated using 3-isothiazolone formulation C and phenyl glycidyl ether as the anti-pitting agent. The metal coupon was 316L stainless steel. After storage at 40° C for 100 days, no pitting was observed (rating = 0).

### Examples 29-30

The procedure of Example 1 was repeated using 3-isothiazolone formulation B and epoxides as the anti-pitting agents. The coupons used in this example were 304L stainless steel and the samples were stored for 90 days at 40° C. The results are reported below.

**Table 4**

| **Example #** | **Epoxide** | **Epoxide Amount (ppm)** | **Rating** |
|---|---|---|---|
| control | none | 0 | 3 |
| 29 | glycerin glycidyl ether | 2600 | 1 |
| 30 | glycerin glycidyl ether | 7300 | 0 |
| Comparative 10 | butyl glycidyl ether | 1000 | 3 |

The above data show epoxides to be effective in reducing the pitting of stainless steel containers in contact with 3-isothiazolone microbicide formulations.

## Claims

1. A microbicide composition having reduced pitting toward stainless steel comprising 0.5 to 75 %wt 3-isothiazolone compound; organic solvent; and 0.1 to 10 %wt of an anti-pitting agent selected from the group consisting of (C₂-C₆)alcohol, zinc acetate, epoxidized derivatives of unsaturated vegetable oil, and mixtures thereof, wherein said composition is substantially free of chloride ion.

2. The composition of claim I wherein the 3-isothiazolone compound is selected from the group consisting of 2-methyl-3-isothiazolone; 5-chloro-2-methyl-3-isothiazolone; 2-ethyl-3-isothiazolone; 5-chloro-2-ethyl-3-isothiazolone; 2-n-octyl-3-isothiazolone; 4,5-dichloro-2-n-octyl-3-isothiazolone; 1,2-benzisothiazolone; 4,5-trimethylene-2-methyl-3-isothiazolone; and mixtures thereof.

3. The composition of claim 1 wherein the organic solvent is selected from the group consisting of ethylene glycol, diethylene glycol, polyethylene glycol, propylene glycol, dipropylene glycol, polypropylene glycol, xylene, toluene, monochlorobenzene, phenoxypropanol, benzyl alcohol, methyl ethyl ketone, acetone, methyl iso-butyl ketone, and mixtures thereof.

4. The composition of claim 1 wherein the epoxidized derivatives of unsaturated vegetable oil are selected from the group consisting of epoxidized soy bean oil, epoxidized grape seed oil, epoxidized cotton seed oil, epoxidized peanut oil, epoxidized safflower oil, epoxidized corn oil, epoxidized olive oil, and mixtures thereof.

5. The composition of claim 1 wherein the anti-pitting agent is present in an amount of 0.2 to 5 %wt, based on the total weight of the composition.

6. A method of reducing the pitting of stainless steel carriers containing a non-aqueous microbicide formulation of a 3-isothiazolone compound in an organic solvent comprising adding to said formulation 0.1 to 10 %wt of an anti-pitting agent selected from the group consisting of water, (C₂-C₆)alcohol, zinc acetate, epoxides and mixtures thereof, wherein said formulation is substantially free of chloride ion.

7. The method of claim 6 wherein the 3-isothiazolone compound is selected from the group consisting of 2-methyl-3-isothiazolone; 5-chloro-2-methyl-3-isothiazolone; 2-ethyl-3-isothiazolone; 5-chloro-2-ethyl-3-isothiazolone; 2-n-octyl-3-isothiazolone; 4,5-dichloro-2-n-octyl-3-isothiazolone; 1,2-benzisothiazolone; 4,5-trimethylene-2-methyl-3-isothiazolone; and mixtures thereof.

8. The method of claim 6 wherein the 3-isothiazolone is present in an amount of 0.5 to 75 %wt, based on the total weight of the 3-isothiazolone and organic solvent.

9. The method of claim 6 wherein the anti-pitting agent is present in an amount of 0.2 to 5 %wt, based on the total weight of the composition.

10. The method of claim 6 wherein the epoxide is selected from the group consisting of butyl glycidyl ether; propyl glycidyl ether; phenyl glycidyl ether; methylphenyl glycidyl ether; tert-butylphenyl glycidyl ether; methoxyphenyl glycidyl ether; 1,2-cyclohexene oxide; beta-pinene oxide; benzyl 3,4-epoxybutyl ether; butyl glycidyl thioether; ethylene glycol bis(glycidyl ether); propylene glycol bis(glycidyl ether); tri(glycidyl ether); glycerol di(glycidyl ether); diglycerol poly(glycidyl ether); trimethylolpropane tri(glycidyl ether); sorbitol poly(glycidyl ether); glycerin glycidyl ether; epoxidized derivatives of unsaturated vegetable oils; and mixtures thereof.

## Patentansprüche

1. Mikrobizide Zusammensetzung mit verminderter Lochfraßkorrosion gegenüber rostfreiem Stahl, umfassend 0,5 bis 75 Gew.-% einer 3-Isothiazolon-Verbindung; organisches Lösungsmittel; und 0,1 bis 10 Gew.-% eines Anti-Lochfraßkorrosionsmittels, ausgewählt aus der Gruppe bestehend aus (C₂-C₆)-Alkohol, Zinkacetat, epoxidierten Derivaten von ungesättigtem Pflanzenöl, und Gemischen davon, wobei die Zusammensetzung im Wesentlichen frei von Chloridionen ist.

2. Zusammensetzung nach Anspruch 1, worin die 3-Isothiazolon-Verbindung ausgewählt ist aus der Gruppe bestehend aus 2-Methyl-3-isothiazolon; 5-Chloro-2-methyl-3-isothiazolon; 2-Ethyl-3-isothiazolon; 5-Chloro-2-ethyl-3-isothiazolon; 2-n-Octyl-3-isothiazolon; 4,5-Dichloro-2-n-octyl-3-isothiazolon; 1,2-Benzisothiazolon; 4,5-Trimethylen-2-methyl-3-isothiazolon; und Gemischen davon.

3. Zusammensetzung nach Anspruch 1, worin das organische Lösungsmittel ausgewählt ist aus der Gruppe bestehend aus Ethylenglykol, Diethylenglykol, Polyethylenglykol, Propylenglykol, Dipropylenglykol, Polypropylenglykol, Xylol, Toluol, Monochlorobenzol, Phenoxypropanol, Benzylalkohol, Methylethylketon, Aceton, Methylisobutylketon, und Gemischen davon.

4. Zusammensetzung nach Anspruch 1, worin die epoxidierten Derivate des ungesättigten Pflanzenöls ausgewählt sind aus einer Gruppe bestehend aus epoxidiertem Sojabohnenöl, epoxidiertem Traubenkernöl, epoxidiertem Baumwollsamenöl, epoxidiertem Erdnussöl, epoxidiertem Färberdistelöl, epoxidiertem Maisöl, epoxidiertem Olivenöl, und Gemischen daraus.

5. Zusammensetzung nach Anspruch 1, wobei das Anti-Lochfraßkorrosionsmittel in einer Menge von 0,2 bis 5 Gew.-% vorliegt, basierend auf dem Gesamtgewicht der Zusammensetzung.

6. Verfahren zur Reduktion der Lochfraßkorrosion von rostfreien Stahlträgern enthaltend eine nicht-wässrige mikrobizide Formulierung einer 3-Isothiazolon-Verbindung in einem organischen Lösungsmittel, umfassend das Zugeben von 0,1 bis 10 Gew.-% eines Anti-Lochfraßkorrosionsmittels, ausgewählt aus der Gruppe bestehend aus Wasser, (C₂-C₆)-Alkohol, Zinkacetat, Epoxiden und Gemischen davon, zu der Formulierung, wobei die Formulierung im Wesentlichen frei von Chloridionen ist.

7. Verfahren nach Anspruch 6, wobei die 3-Isothiazolon-Verbindung ausgewählt ist aus der Gruppe bestehend aus 2-Methyl-3-isothiazolon; 5-Chloro-2-methyl-3-isothiazolon; 2-Ethyl-3-isothiazolon; 5-Chloro-2-ethyl-3-isothiazolon; 2-n-Octyl-3-isothiazolon; 4,5-Dichloro-2-n-octyl-3-isothiazolon; 1,2-Benzisothiazolon; 4,5-Trimethylen-2-methyl-3-isothiazolon; und Gemischen davon.

8. Verfahren nach Anspruch 6, wobei das 3-Isothiazolon in einer Menge von 0,5 bis 75 Gew.-% vorliegt, basierend auf dem Gesamtgewicht des 3-Isothiazolons und des organischen Lösungsmittels.

9. Verfahren nach Anspruch 6, wobei das Anti-Lochfraßkorrosionsmittel in einer Menge von 0,2 bis 5 Gew.-% vorliegt, basierend auf dem Gesamtgewicht der Zusammensetzung.

10. Verfahren nach Anspruch 6, wobei das Epoxid gewählt ist aus einer Gruppe bestehend aus Butylglycidylether; Propylglycidylether; Phenylglycidylether; Methylphenylglycidylether; Tert-butylphenylglycidylether; Methoxyphenylglycidylether; 1,2-Cyclohexenoxid; Beta-pinenoxid; Benzyl-3,4-epoxybutylether; Butylglycidylthioether; Ethylenglykol-bis(glycidylether); Propylenglykol-bis(glycidylether); Tri(glycidylether); Glycerin-di(glycidylether); Diglycerinpoly(glycidylether); Trimethylolpropantri(glycidylether); Sorbitolpoly(glycidylether); Glyceringlycidylether; epoxidierten Derivaten von ungesättigten Pflanzenölen; und Gemischen davon.

## Revendications

1. Composition microbicide entraînant moins de piqûres sur l'acide inoxydable comprenant 0,5 à 75% en poids de composé 3-isothiazolone; un solvant organique; et 0,1 à 10% en poids d'un agent antipiqûre choisi dans le groupe constitué par un alcool en C₂-C₆, l'acétate de zinc, les dérivés époxydés d'huile végétale insaturée, et leurs mélanges, ladite composition étant essentiellement exempte d'ions chlore.

2. Composition selon la revendication 1 dans laquelle le composé 3-isothiazolone est choisi dans le groupe constitué par la 2-méthyl-3-isothiazolone, la 5-chloro-2-méthyl-3-isothiazolone, la 2-éthyl-3-isothiazolone, la 5-chloro-2-éthyl-3-isothiazolone, la 2-n-octyl-3-isothiazolone, la 4,5-dichloro-2-n-octyl-3-isothiazolone, la 1,2-benzisothiazolone, la 4,5-triméthylène-2-méthyl-3-isothiazolone, et leurs mélanges.

3. Composition selon la revendication 1 dans laquelle le solvant organique est choisi dans le groupe constitué par l'éthylèneglycol, le diéthylèneglycol, le polyéthylèneglycol, le propylèneglycol, le dipropylèneglycol, le polypropylèneglycol, le xylène, le toluène, le monochlorobenzène, le phénoxypropanol, l'alcool benzylique, la méthyléthylcétone, l'acétone, la méthyl-iso-butylcétone, et leurs mélanges.

4. Composition selon la revendication 1 dans laquelle les dérivés époxydés d'huile végétale insaturée sont choisis dans le groupe constitué par l'huile de soja époxydée, l'huile de pépins de raisin époxydée, l'huile de graine de coton époxydée, l'huile d'arachide époxydée, l'huile de carthame époxydée, l'huile de maïs époxydée, l'huile d'olive époxydée, et leurs mélanges.

5. Composition selon la revendication 1 dans laquelle l'agent antipiqûre est présent dans une proportion de 0,2 à 5% en poids, par rapport au poids total de la composition.

6. Procédé de réduction des piqûres sur des supports en acier inoxydable contenant une formulation microbicide non aqueuse d'un composé 3-isothiazolone dans un solvant organique, comprenant l'addition à ladite formulation de 0,1 à 10% en poids d'un agent antipiqûre choisi dans le groupe constitué par l'eau, un alcool en C₂-C₆, l'acétate de zinc, les époxydes, et leurs mélanges, dans lequel ladite formulation est essentiellement exempte d'ions chlorure.

7. Procédé selon la revendication 6 dans lequel le composé 3-isothiazolone est choisi dans le groupe constitué par la 2-méthyl-3-isothiazolone, la 5-chloro-2-méthyl-3-isothiazolone, la 2-éthyl-3-isothiazolone, la 5-chloro-2-éthyl-3-isothiazolone, la 2-n-octyl-3-isothiazolone, la 4,5-dichloro-2-n-octyl-3-isothiazolone, la 1,2-benzisothiazolone, la 4,5-triméthylène-2-méthyl-3-isothiazolone, et leurs mélanges.

8. Procédé selon la revendication 6 dans lequel la 3-isothiazolone est présente dans une proportion de 0,5 à 75% en poids, par rapport au poids total de la 3-isothiazolone et du solvant organique.

9. Procédé selon la revendication 6 dans lequel l'agent antipiqûre est présent dans une proportion de 0,2 à 5% en poids, par rapport au poids total de la composition.

10. Procédé selon la revendication 6 dans lequel l'époxyde est choisi dans le groupe constitué par le butylglycidyléther, le propylglycidyléther, le phénylglycidyléther, le méthylphénylglycidyléther, le t-butylphénylglycidyléther, le méthoxyphénylglycidyléther, l'oxyde de 1,2-cyclohexène, l'oxyde de bêta-pinène, le benzyl-3,4-époxybutyléther, le butylglycidylthioéther, le bis(éther glycidylique) d'éthylèneglycol, le bis-(éther glycidylique) de propylèneglycol, le tri(éther glycidylique), le di-(éther glycidylique) de glycérol, le poly(éther glycidylique) de diglycérol, le tri(éther glycidylique) de triméthylolpropane, le poly(éther glycidylique) de sorbitol, l'éther glycidylique de glycérine, les dérivés époxydés d'huiles végétales insaturées, et leurs mélanges.
